# DEMANDE DE BREVET EUROPEEN

(11) **EP 0 973 310 A1**
(43) Date de publication de la demande: **19.01.2000**
(21) Numéro de dépôt: 99202180.8
(22) Date de dépôt: 06.07.1999
(51) Int. Cl.: H04M 1/66, H04M 1/72

(54) **Radiotéléphone ayant une fonction de verrouillage du clavier**

(30) Priorité: 16.07.1998 FR 9809105
(71) Demandeur: Koninklijke Philips Electronics N.V., 5621 BA Eindhoven (NL)
(72) Inventeur: Decotignie, Philippe, 75008 Paris (FR); Giorgi, Sabine, 75008 Paris (FR)
(74) Mandataire: Chaffraix, Jean

(57) **Abrégé**

Pour éviter une utilisation frauduleuse de l'appareil, par exemple un appel non autorisé, les commandes de l'appareil, notamment le clavier (9), sont bloquées après un certain temps d'inactivité. On doit saisir un code de déverrouillage pour rendre l'appareil disponible.

On propose cependant que les appels entrants soient autorisés, ainsi que les appels d'urgence.
- Application :: radiotéléphones portables.

## Description

La présente invention concerne un appareil de radiotéléphonie mobile formé de circuits permettant à son utilisateur de recevoir des appels entrants et d'établir des appels sortants, appareil comportant :
- un dispositif d'interface entre l'utilisateur et les circuits de l'appareil, muni d'un moyen de blocage/déblocage pour mettre le dispositif en un état de blocage destiné à empêcher son utilisation normale lorsqu'il reçoit une information d'activation de blocage et en un état de disponibilité pour rendre l'appareil accessible à l'utilisateur lorsqu'il reçoit une information de déblocage.

L'invention concerne aussi un procédé pour protéger un tel appareil.

De tels appareils sont bien connus et trouvent de nombreuses applications, notamment dans le domaine des appareils de téléphonie portables. Ces appareils sont destinés à accompagner leurs utilisateurs et il arrive que ceux-ci les laissent abandonnés un instant sans surveillance, en un endroit fréquenté. Ceci peut donc être la cause de vol de l'appareil ou même d'utilisation par un tiers qui profite de l'occasion pour passer des communications coûteuses.

Il est connu du document de brevet américain n^{o} US 4,908,848 de bloquer ou de restreindre l'utilisation dudit appareil.

Cependant ce genre de blocage est mal adapté aux postes de radiotéléphonie, car il ne faut pas oublier de le mettre en blocage dès qu'on a fini de l'utiliser.

La présente invention propose un appareil du genre mentionné dans le préambule, bien adapté à l'exploitation des postes radiotéléphoniques mobiles, qui permet de résoudre ce problème d'oubli.

Pour cela, un tel appareil est remarquable en ce que : il comporte un circuit de temporisation pour fournir une information d'activation audit circuit de blocage après un temps déterminé d'inaction de l'appareil.

L'idée de l'invention est d'éviter que des appels non autorisés par le propriétaire de l'appareil ne puissent être effectués. En outre, on souhaite que les appels entrants soient traités de façon transparente.

Une caractéristique selon laquelle un accès est accordé auxdits circuits pour un appel sortant d'urgence, donne l'avantage que l'appareil assure une fonction de sécurité pour quiconque, en cas de besoin, a la nécessité de faire cet appel d'urgence.

La description suivante, faite en regard des dessins ci-annexés, le tout donné à titre d'exemple non limitatif, fera bien comprendre comment l'invention peut être réalisée.
La figure 1 montre un appareil conforme à l'invention.
La figure 2 montre le schéma électrique global de l'appareil de la figure 1.
La figure 3 est un organigramme explicitant le fonctionnement de l'appareil de la figure 1.

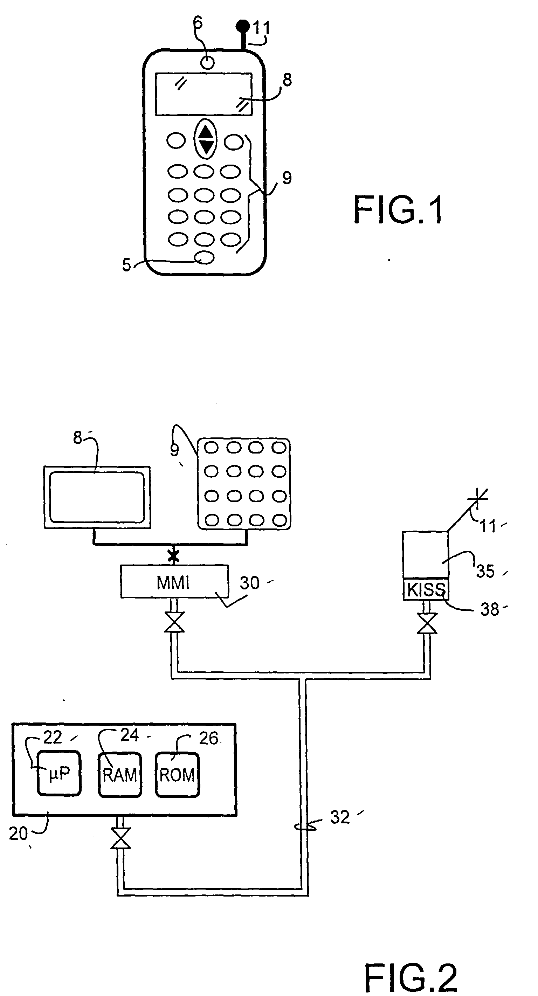

A la figure 1, on a représenté un appareil électronique conforme à l'invention. Dans le cadre de l'exemple décrit, c'est un appareil radiotéléphonique portable du genre utilisé dans les systèmes cellulaires. Il est composé d'un microphone 5, d'un écouteur 6, d'un écran 8, d'un clavier 9 et d'une antenne 11.

La figure 2 montre le schéma global électrique de cet appareil. Les éléments communs avec ceux de la figure précédente portent les mêmes références. Le fonctionnement est essentiellement régi par un ensemble à microprocesseur 20 comprenant, de manière connue, un microprocesseur 22 auquel sont associées une mémoire vive 24 et une mémoire morte 26. Cet ensemble est relié au dispositif d'interface 30, appelé plus communément interface homme machine, par l'intermédiaire d'une ligne commune 32. Ce dispositif permet à l'utilisateur d'effectuer des commandes sur son appareil en vue d'exploiter ses possibilités. Il est possible ainsi de bloquer une ou plusieurs commandes vers l'écran 8 et/ou provenant du clavier 9. On constitue alors facilement un moyen de blocage/déblocage pour bloquer ou débloquer le fonctionnement de l'appareil. L'ensemble 20 agit aussi sur un ensemble émission-réception 35 auquel est branchée l'antenne il en passant par un circuit d'interface 38.

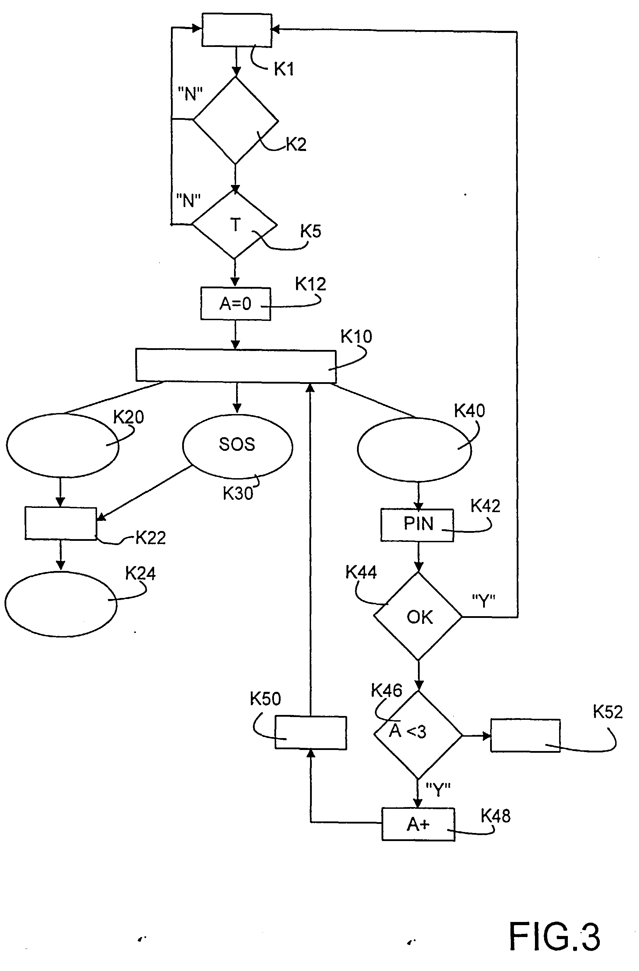

La figure 3 est un organigramme pour expliciter le fonctionnement de l'appareil de la figure 1. Cet organigramme débute à la case K1 qui indique qu'on est dans le mode de disponibilité, c'est-à-dire que l'on a accès à toutes les fonctions de l'appareil. Lorsqu'on est dans ce mode, on examine si le mode de blocage automatique a été demandé par l'utilisateur, case K2. Ce mode se demande par exemple dans un menu de configuration. Si ce mode de blocage automatique est demandé, on va examiner (case K5) si l'appareil est resté à l'état de disponibilité depuis un certain temps T, par exemple un temps de l'ordre de 5 minutes. Si ce n'est pas le cas, on reste dans cet état de disponibilité indiqué à la case K1. Si c'est le cas, on passe donc automatiquement à l'état de blocage conforme à l'invention, case K10, en transitant par une case K12 qui explicite l'initialisation d'un nombre d'essais pour introduire un code de déverrouillage pour faire cesser l'état de blocage.

Pour sortir de cet état de blocage on propose au moins trois façons indiquées sur cet organigramme de la figure 3.

La première façon est constituée selon un aspect de l'invention par un appel entrant, case K20. Cet appel est traité de la façon habituelle, comme n'importe quel appel, case K22. L'appel terminé, on effectue les procédures de fin de communication, case K24.

La deuxième façon est celle qui implique un appel d'urgence ou un appel au secours. N'importe qui, le propriétaire de l'appareil ou non, compose le numéro ou un des numéros affectés aux appels d'urgence, case K30, le numéro reconnu entraîne l'exécution de la procédure déjà mentionnée (case K22).

La troisième façon est celle qui est permise à celui qui connaît le code de déverrouillage affecté à cette fonction ; ce sera, selon un exemple de réalisation, le code d'identification PIN (cf. normes relatives aux systèmes de radiotéléphonie cellulaire GSM), utilisé lorsque l'appareil est mis en service. Pour cela, on appuie sur une touche du clavier( case K40), ce qui fait que le code PIN est demandé à l'utilisateur, case K42. Si ce numéro est reconnu (test de la case K44), on passe alors de l'état de blocage à l'état de disponibilité, case K1. Si ce numéro n'est pas reconnu, on teste à la case K46, la valeur de la variable A initialisée à la case K12. Si cette valeur est inférieure à un certain chiffre par exemple 3, alors la valeur de A est augmentée d'une unité, case K48. Un message signalant que le code n'est pas valable (case K50), est signifié à l'utilisateur sur son écran 8. L'appareil retourne à son état de blocage, case K10. Si la variable est supérieure audit chiffre, alors le test de la case K46 provoque un blocage total de l'appareil indiqué par la case K52. Cet état de blocage total peut être par exemple une coupure de l'alimentation. On ne pourra donc sortir de cet état de blocage total qu'en rallumant l'appareil.

## Revendications

1. Appareil de radiotéléphonie mobile formé de circuits permettant à son utilisateur de recevoir des appels entrants et d'établir des appels sortants, appareil comportant :
- un dispositif d'interface entre l'utilisateur et les circuits de l'appareil, muni d'un moyen de blocage/déblocage pour meure le dispositif en un état de blocage destiné à empêcher son utilisation normale lorsqu'il reçoit une information d'activation de blocage et en un état de disponibilité pour rendre l'appareil accessible à l'utilisateur lorsqu'il reçoit une information de déblocage,
caractérisé en ce qu'il comporte un circuit de temporisation pour fournir une information d'activation audit circuit de blocage après un temps déterminé d'inaction de l'appareil.

2. Appareil selon la revendication 1, caractérisé en ce que l'état de blocage est mis en oeuvre pour certains appels sortants.

3. Appareil selon la revendication 1 ou 2, caractérisé en ce qu'une information de déblocage est fournie audit moyen de blocage/déblocage pour un appel sortant d'urgence.

4. Appareil selon l'une des revendications 1 à 3, caractérisé en ce qu'un code de déverrouillage est utilisé pour former une information de déblocage.

5. Appareil selon la revendication 4, caractérisé en ce qu'un code de déverrouillage erroné une pluralité de fois met l'appareil dans un état de blocage total.

6. Appareil selon la revendication 5, caractérisé en ce que pour sortir de l'état de blocage total, l'appareil doit être mis hors service.

7. Procédé pour protéger un appareil de radiotéléphonie mobile selon l'une des revendications 1 à 6, caractérisé en ce qu'il comporte les étapes suivantes :
- affectation d'un code de déverrouillage,
- détection d'une période d'inactivité,
- passage en un état de blocage à partir d'un état de disponibilité, après détection de ladite période d'inactivité,
- passage à l'état de disponibilité à partir de l'état de blocage, après entrée d'un code de déverrouillage,
- accès aux circuits de l'appareil pour des appels entrants et/ou des appels d'urgence.
